Europäisches Patentamt

European Patent Office

Office européen des brevets

(19)

(11) Veröffentlichungsnummer: **0 409 990 A1**

# EUROPÄISCHE PATENTANMELDUNG
## veröffentlicht nach Art. 158 Abs. 3
### EPÜ

(12)

(21) Anmeldenummer: 89906483.6

(22) Anmeldetag: 26.01.89

(86) Internationale Anmeldenummer:
PCT/SU89/00025

(87) Internationale Veröffentlichungsnummer:
WO 90/08617 (09.08.90 90/19)

(51) Int. Cl.5: **B23K 9/08, B23K 20/02**

(43) Veröffentlichungstag der Anmeldung:
30.01.91 Patentblatt 91/05

(84) Benannte Vertragsstaaten:
AT DE FR GB IT SE

(71) Anmelder: **INSTITUT ELEKTROSVARKI IMENI E.O.PATONA AKADEMII NAUK UKRAINSKOI SSR**
ul. Bozhenko, 11
Kiev, 252650(SU)

(72) Erfinder: **KUCHUK-YATSENKO, Sergei Ivanovich**
ul. P.Osipenko, 17-18
Kiev, 252025(SU)
Erfinder: **IGNATENKO, Vadim Jurievich**
ul. Boichenko, 13-45
Kiev, 252206(SU)
Erfinder: **GENIS, Igor Andrianovich**
ul. Nischinskogo, 5-39
Kiev, 252049(SU)
Erfinder: **JUMATOV, Viktor Vasilievich**
ul. Krasnoarmeiskaya, 51-46
Kiev, 252005(SU)
Erfinder: **KRIVENKO, Valery Georgievich**
ul. Melnikova, 18-58
Kiev, 252050(SU)
Erfinder: **KUZNETSOV, Petr Vasilievich**
ul. Demeevskaya, 53-48
Kiev, 252109(SU)
Erfinder: **KACHINSKY, Vladimir Stanislavovich**
ul. N.Krasnova, 8-53
Kiev, 252115(SU)

(74) Vertreter: **Patentanwälte Beetz sen. - Beetz jun. Timpe - Siegfried - Schmitt-Fumian-Mayr**
Steinsdorfstrasse 10
D-8000 München 22(DE)

EP 0 409 990 A1

(54) VERFAHREN ZUM PRESSSCHWEISSEN MIT EINER ERWÄRMUNG MITTELS EINES IN EINEM MAGNETISCHEN FELD BEWEGENDEN LICHTBOGENS.

(57) Verfahren zum Preßschweissen von Teilen mit der Erwärmung durch einen sich in einem Magnetfeld bewegenden Lichtbogen besteht darin, dass man Teile (2, 3) mit einem Arbeitsluftspalt (δ) zwischen ihren Stirnflächen gleichachsig anordnet, im Spalt (δ) ein Magnetfeld erzeugt un einen elektrischen Lichtbogen (6) zündet, der eine Erhitzung der Stirnflächen der Teile (2, 3) bewirkt. Es wird die Gleichspannungskomponente des Lichtbogens (6) gemessen, worauf, sobald sie ihren Minimalwert erreicht hat, der der Erreichung der Temperatur einer plastischen Verformung des Werkstoffes der Teile (2, 3) durch die Temperatur des Stirnflächen der Teile (2, 3) entspricht, ein stossartiger Anstieg des Lichtbogenstroms (6) mit anschliessendem Stauchen der Teile (2, 3) verwirklicht wird.

# VERFAHREN ZUM PREẞSCHWEISSEN VON TEILEN MIT DER ERWÄRMUNG DURCH EINEN SICH IN EINEM MAGNETFELD BEWEGENDEN LICHTBOGEN

## Gebiet der Technik

Die vorliegende Erfindung bezieht sich auf das Preßschweissen und betrifft insbesondere ein Verfahren zum Preßschweissen von Teilen mit der Erwärmung durch einen sich in einem Magnetfeld bewegenden Lichtbogen.

## Vorhergehender Stand der Technik

Ein besonderes Problem beim Schweissen von Kleinrohren, bei denen es nicht möglich erscheint, sie im Schweissvorgang, beispielsweise bei der Verlegung von Rohrleitungen, zu drehen, stellt die Sicherung der stabilen Güte der Schweissverbindungen bei gleichzeitiger hoher Prozessleistung dar. Gegenwärtig werden derartige Rohre im wesentlichen von Hand unter Benutzung von ummantelten Elektroden oder unter Schutzgas geschweisst. Die Güte der erhaltenen Schweissverbindungen hängt in bedeutendem Masse von der Qualifikation des Schweissers, der Materialgüte und den Schweissbedingungen ab. Die Änderung der räumlichen Lage der Schweisszone beim Übergang vom oberen zum unteren Punkt der Stoßstelle kompliziert den Vorgang im Zusammenhang mit der Notwendigkeit einer entsprechenden Korrektur der Schweissparameter.

Um Fehler zu vermeiden, die für eine Handlichtbogenschweissung charakteristisch sind, werden in einer Reihe von Fällen Schweissanlagen mit einer Mikroprozessorsteuerung eingesetzt. Hierbei wird die Güte der Schweissverbindungen verbessert und steigt etwas die Leistung, jedoch werden die Kosten der Schweissausrüstung wesentlich gesteigert, die Forderungen an die Qualifikation des Bedienungspersonals erhöht und bestimmte Beschränkungen auf die Betriebsbedingungen der Ausrüstung (beispielsweise hinsichtlich der Temperatur, Verstaubung und der Luftfeuchtigkeit) auferlegt.

In einer Reihe von Fällen wird ein Widerstands-
-Abbrennstumpfschweissen aus dem Kalten verwendet, bei
dem die Stabilität der Güte der Schweissverbindungen
bei einem hohen Automatisierungsgrad des Vorganges
gewährleistet wird. Ein derartiges Schweissverfahren
kann sowohl unter den betriebs- als auch feldmässigen
Bedingungen realisiert werden. Die im bekannten Verfahren hergestellten Schweissverbindungen werden aber
durch das Vorhandensein eines Grates unregelmässiger
Form im spitzen Ansätzen und Wülsten gekennzeichnet,
der sowohl auf den Aussen als auch auf den Innenflächen
der Rohrleitung gebildet wird. Hierbei muss der Grat
von der Innenfläche der Rohrleitung entfernt werden,
weil er den Durchgangsquerschnitt verringert, wodurch
ein Widerstand den über die Rohrleitung geförderten
Medien entgegengesetzt wird. Derartiger Grat wird in
der Regel mit Hilfe eines an einer Stange befestigten
Schneidwerkzeuges entfernt, was den Vorgang kompliziert
und lediglich auf geradlinigen Rohrleitungsstrecken
erwirklicht werden kann.

In der letzten Zeit werden zum Schweissen von
Kleinrohren Verfahren zum Schweissen durch einen sich
in einem Magnetfeld bewegenden Lichtbogen verwendet,
die am aussichtsreichsten und leistungsfähigsten sind.

Es ist ein Verfahren zum Preßschweissen mit der
Erwärmung durch einen sich in einem Magnetfeld bewegenden Lichtbogen (DD, A, 129179) bekannt, darin bestehend, dass man die Schweissteile, insbesondere Rohre,
gleichachsig mit einem Arbeitsluftspalt zwischen ihren
Stirnflächen anordnet, in dem ein magnetisches Gleichfeld erzeugt wird, einen elektrischen Lichtbogen zündet,
der sich unter der Wirkung des magnetischen Gleichfeldes auf dem Umfang der Stirnflächen bewegt. Am Anfang
des Vorganges wird der Lichtbogenstrom derart eingestellt, dass die Stirnflächen der Schweissteile auf
die Temperatur einer plastischen Verformung erhitzt
werden, worauf ein stossartiger Anstieg des Lichtbogenstroms und ein Stauchen folgen.

Im beschriebenen Verfahren wird die Zeit der Erwärmung der Stirnflächen auf die Temperatur der plastischen Verformung voreingestellt, ohne dass eventuelle Abweichungen des Bogenstromwertes oder der Abmessungen der Schweissteile, beispielsweise des Durchmessers oder der Wanddicke der zu verschweissenden Rohre, berücksichtigt werden. Dies wirkt sich ungünstig auf die Stabilität der Güte der Schweissverbindungen aus. Derartige Abweichungen werden auch bei einem Festwert der Dauer des stossartigen Anstiege des Lichtbogenstroms nicht in Betracht gezogen. Darüber hinaus gestattet das bekannte Verfahren'es nicht, lokale Änderungen des Spaltes zu bestimmen, die durch die Nichtparallelität der Stirnflächen und deren Unebenheiten bedingt sind. Infolgedessen kann die erhaltene Schweissverbindung lokale Defekte aufweisen.

Beim Übergang zum Schweissen von Teilen anderer Typengrössen werden entsprechende Änderungen von Schweissparametern gefordert, die in der Regel nach einer Serie von Versuchsschweissungen eingestellt werden, was zu einem zusätzlichen Zeit- und Energieaufwand führt.

Das bekannte Verfahren zum Schweissen mit der Erwärmung durch einen sich in einem Magnetfeld bewegenden Lichtbogen kann also nicht die Stabilität der Güte der Schweissverbindung garantieren,

Es ist auch ein Verfahren zum Preßschweissen von Teilen mit der Erwärmung durch einen sich in einem Magnetfeld bewegenden Lichtbogen (ZIS-Mitteilungen (DDR), Nr. 10, 1982, S. 1051 bis 1055) bekannt, darin bestehend, dass man die Schweissteile gleichachsig mit einem Spalt zwischen ihren Stirnflächen anordnet, in dem ein elektrischer Lichtbogen gezündet, wird, im Arbeitsluftspalt ein Magnetfeld erzeugt, unter dessen Wirkung sich der elektrische Lichtbogen auf dem Umfang der Stirnflächen der Schweissteile bewegt, wobei er sie auf die Temperatur einer plastischen Verformung des Werkstoffes der Schweissteile erhitzt, den Zeitpunkt der Erreichung dieser Temperatur feststellt, seit welchem ein stossartiger Anstieg des Lichtbogenstroms auf einen Wert verwirklicht wird, bei dem die Temperatur der Stirnflächen der Schweissteile den Schmelzpunkt des Werkstoffes der Schweissteile erreicht, und ein Stauchen der Schweissteile durchführt.

Im bekannten Verfahren wird der Zeitpunkt der Erwärmung der Stirnflächen auf die Temperatur der plastischen Verformung nach der Menge der an den Stirnflächen der Schweissteile, nämlich der Rohre, gespeicherten Wärmeenergie bestimmt. Ihrerseits wird die Menge der gespeicherten Wärmeenergie mit Hilfe eines Elektronenrechners ermittelt, indem der Lichtbogenstrom und die Lichtbogenspannung gemessen werden und der Wärmeenergiebetrag alle 0,1 s abgelesen wird.

Es muss jedoch beachtet werden, dass die auf Grund der gemessenen Werte des Lichtbogenstroms und der Lichtbogenspannung ermittelte Energiemenge praktisch eine durch den Lichtbogen erzeugte Energie ist. Nur ein Teil dieser Energie wird an den Stirnflächen der zu verschweissenden Rohre gespeichert, der in hohem Masse von den Bedingungen des Wärmeaustausches mit der Umgebung (Umgebungstemperatur, Vorhandensein der Luftbewegung, eventueller Kontakt der zu verschweissenden Rohre mit den eine hohe Wärmeleitfähigkeit aufweisenden Konstruktionselementen) abhängig und nicht immer sicher ist.

Die Menge der an den Stirnflächen der Schweissteile gespeicherten Energie kann also nicht nach der Menge der ermittelten Energie eindeutig bewertet werden.

Darüber hinaus wird die Dauer des stossartigen Stromanstiegs im bekannten Verfahren voreingestellt, wobei die eventuellen Abweichungen im Grad der Erwärmung der Stirnflächen der Schweissteile unberücksichtigt bleiben.

Bei einer Änderung der Typengrössen der Schweissteile sind in den Elektronenrechner Daten einzugeben, die dem neuen Wärmeenergiewert entsprechen, bei dessen Überschreiten ein stossartiger Stromanstieg verwirklicht wird.

Trotz der Anwendung einer komplizierten Rechentechnik im System der Steuerung des Schweissvorganges sieht das Verfahren keine Möglichkeit zur Messung einer Spaltgrösse vor und garantiert keine hohe Stabilität der Güte der Schweissverbindungen. Ausserdem muss zur Bedienung der Anlage, auf der das bekannte Verfahren durchgeführt wird, ein hochqualifiziertes Personal herangezogen werden, während die Betriebsbedingungen durch einen bestimmten Umgebungstemperaturbereich beschränkt sind.

Offenbarung der Erfindung

Der Erfindung liegt die Aufgabe zugrunde, ein Verfahren zum Preßschweissen von Teilen mit der Erwärmung durch einen sich in einem Magnetfeld bewegenden Lichtbogen zu entwickeln, in dem die Bestimmung des Zeitpunktes, bei welchem die Temperatur der Stirnflächen der Schweissteile praktisch der Temperatur einer plastischen Verformung des Werkstoffes der Schweissteile gleich ist, auf Grund der Bestimmung einer Änderung von Längsmassen der Schweissteile erfolgt, was es gestattet, eine Korrektur von Schweissparametern entsprechend den Änderungen der Schweissbedingungen und der Abmessungen der Schweissteile vorzunehmen, wodurch eine stabile Güte der Schweissverbindungen gewährleistet wird.

Die gestellte Aufgabe wird dadurch gelöst, dass in dem Verfahren zum Preßschweissen von Teilen mit der Erwärmung durch einen sich in einem Magnetfeld bewegenden Lichtbogen, darin bestehend, dass man die Schweissteile gleichachsig mit einem Arbeitsluftspalt zwischen ihren Stirnflächen anordnet, in dem ein elektrischer Lichtbogen gezündet wird, im Arbeitluftspalt ein Magnetfeld erzeugt, unter dessen Wirkung sich der elektrische Lichtbogen auf dem Umfang der Stirnflächen der Schweissteile bewegt, wobei er sie auf die Temperatur einer

EP 0 409 990 A1

- 6 -

plastischen Verformung des Werkstoffes der Schweissteile erhitzt, den Zeitpunkt der Erreichung dieser Temperatur feststellt, seit welchem ein stossartiger Anstieg des Lichtbogenstroms auf einen Wert verwircklicht wird, bei dem die Temperatur der Stirnflächen der Schweiss eile den Schmelzpunkt des Werkstoffes der Schweissteile erreicht, und ein Stauchen der Schweissteile durchführt, erfindungsgemäss die Bestimmung des Zeitpunktes, bei dem die Temperatur der Stirnflächen der Schweissteile praktisch der Temperatur der plastischen Verformung des Werkstoffes der Schweissteile gleich ist, durch Messen der Gleichspannungskomponente des elektrischen Lichtbogens erfolgt, wobei für diese Gleichkomponente ein Minimalwert eingestellt wird, bei dem die Temperatur der Stirnflächen der Schweissteile praktisch gleich der Temperatur der plastischen Verformung des Werkstoffes der Schweissteile ist, und bei Erreichen des Minimalwertes durch die Gleichspannungskomponente des elektrischen Lichtbogens ein stossartiger Anstieg des Lichtbogenstroms verwirklicht wird.

Es ist zweckmässig, dass ein Maximalwert der Gleichspannungskomponente des elektrischen Lichtbogens eingestellt wird, bei dem die Stirnflächen der Schweissteile aufgeschmolzen werden, und bei Erreichen des Maximalwertes durch die Gleichspannungskomponente des elektrischen Lichtbogens ein Stauchen der Schweissteile durchgeführt wird.

Es ist sinnvoll, dass die Grösse eines lokalen Spaltes auf dem Umfang der Stirnflächen der Schweissteile in einem Zeitintervall von der Lichtbogenzündung bis zum Augenblick der Erreichung des Minimalwertes durch die Gleichspannungskomponente des elektrischen Lichtbogens bestimmt und bei Überschreiten des Arbeitsluftspaltes durch die Grösse des lokalen Spaltes der elektrische Lichtbogen gelöscht wird, die Schweissteile in axialer Richtung aneinandergebracht werden, bis ihre Stirnflächen einander im Laufe einer Zeit berühren, die für deren Abkühlung auf eine Temperatur unterhalb der Temperatur der plastischen Verformung des Werkstoffes der Schweissteile erforderlich ist, worauf die Schweissteile um die Grösse des ursprünglich eingestellten Arbeitsluftspaltes auseinandergebracht werden, in dem ein elektrischer Lichtbogen neugezündet wird.

Vorteilhaft ist, dass die Bestimmung der Grösse des lokalen Spaltes auf dem Umfang der Stirnflächen der Schweissteile durch Messung der Wechselspannungskomponente des elektrischen Lichtbogens erfolgt, für die ein Grenzwert festgelegt wird, der dem Überschreiten des Arbeitsluftspaltes durch die Grösse des lokalen Spaltes entspricht.

Das erfindungsgemässe Verfahren zum Preßschweissen gewährleistet eine hohe Stabilität der Güte der Schweissverbindungen unter Beachtung eventueller Abweichungen der Abmessungen der Schweissteile und der Prozessparameter. Hierbei erübrigt sich die Anwendung von komplizierten Systemen der automatischen Regelung auf der Basis der Rechentechnik, was die Anforderungen an die Betriebsbedigungen für die Ausrüstung und an die Qualifikation des Bedienungspersonale ermässigt.

Gleichzeitig wird die Voreinstellung von Schweissparametern erleichtert, und es entfällt eine grosse Anzahl von Naturmodellen zur Abarbeitung von Betriebsarten. Es wird also eine schnelle Umrüstung der Anlage, auf der das erfindungsgemässe Verfahren durchgeführt wird, beim Übergang zum Verschweissen von Teilen verschiedener Grössen gewährleistet. Das Verfahren sorgt für eine automatische Korrektur der Betriebsarten bei einer Änderung der Quermasse der Schweissteile um das 1,5 fache.

Kurzbeschreibung der Zeichnungen

Die Erfindung wird nachstehend an einer konkreten Ausführungsform unter Bezugnahme auf Beispiele und Zeichnungen näher erläutert. Es zeigen:

Fig. 1 schematisch eine Anlage, auf der das Verfahren zum Preßschweissen von Teilen mit der Erwärmung durch einen sich in einem Magnetfeld bewegenden Lichtbogen durchgeführt wird, mit einer Steuereinheit;

Fig. 2 (a,b,c) Zeitdiagramme der Änderung der Gleichspannungskomponente, des Stroms des elektrischen Lichtbogens und der Bewegung eines der Schweissteile.

Bevorzugte Ausführungsform der Erfindung

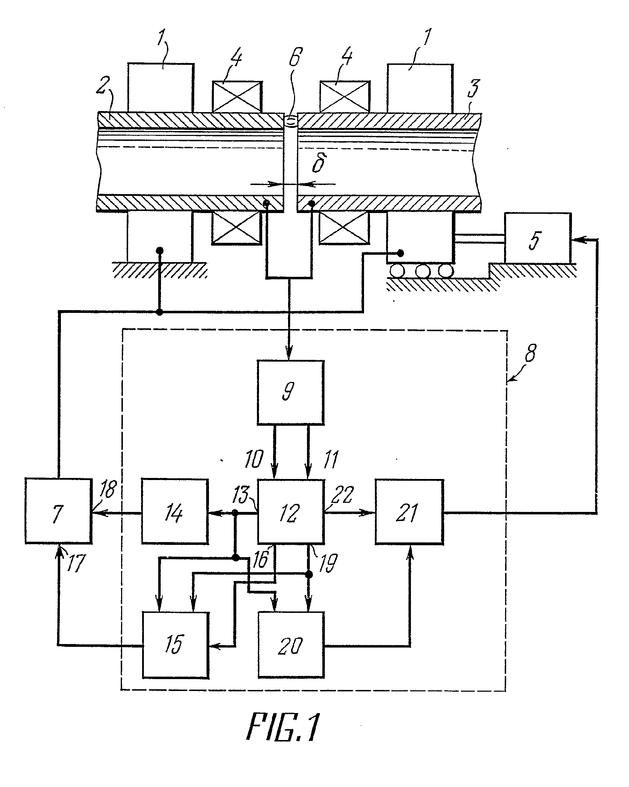

Das Verfahren zum Preßschweissen mit der Erwärmung von Teilen durch einen sich in 'einem Magnetfeld bewegenden Lichtbogen kann auf einer bekannten Anlage durchgeführt werden, die zwei Spannvorrichtungen 1 (Fig. 1) enthält, in denen gleichachsig Schweissteile 2,3 mit einem geschlossenen Kreis im Querschnitt, beispielsweise Rohre, angeordnet sind. Ausserhalb der Schweissteile 2,3 sind auf deren Umfang und in der Nähe der Stirnflächen Magneten 4 (Dauer- oder Elektromagneten) montiert. Das Teil 3 ist bezüglich des Teiles 2 mit Möglichkeit einer Verschiebung in Achsrichtung angeordnet, die durch einen Antrieb 5 zur hin- und hergehenden Bewegung vollführt wird.

Zwischen den Stirnflächen der Schweissteile 2,3 ist ein elektrischer Lichtbogen schematisch dargestellt.

Die Anlage enthält eine Schweißstromquelle 7, als welche ein Schweissgleichrichter mit einer fallenden Stromspannungskennlinie eingesetzt werden kann, dessen Ausgangsklemmen an die Spannvorrichtungen 1 angeschlossen sind. Die Anlage ist mit einer Steuereinheit 8 versehen, deren Ausgangssignale auf den Antrieb 5 zur hin- und hergehenden Bewegung und auf die Schweißstromquelle 7 einwirken. Die Steuereinheit 8 enthält einen Spannungsgeber 9, der an die Stirnflächen der Schweissteile 2,3 geführt ist. Im Spannungsgeber 9 werden die Wechsel- und Gleichspannungskomponente $U_a$ bzw. $U_d$ des Lichtbogens 6 getrennt. Die diesen Komponenten $U_d$, $U_a$ zugeordneten Signale gelangen auf die Eingänge 10,11 einer Vergleichsschaltung 12. Ein Ausgang 13 der Vergleichsschaltung 12 ist an den Eingang eines Lichtbogenstromreglers 14 und an den ersten Eingang eines Schalters 15 gelegt, an dessen Eingang ein Ausgang 16 der Vergleichsschaltung 12 gelegt ist. Der Ausgang des Schalters 15 ist mit einem Steuereingang 17 der Schweißstromquelle 7 verbunden, mit deren anderem Steuereingang 18 der Ausgang des Stromreglers 14 verbunden ist. An einen Ausgang 19 der Vergleichsschaltung 12 sind der dritte Eingang des Schalters 15 und der erste Eingang einer Verzögerungsschaltung 20 angeschlossen, deren zweiter Eingang an den Ausgang 13 der Vergleichsschaltung 12 gelegt ist. Der Ausgang der Verzögerungsschaltung 20 ist mit einem Eingang einer Anlaßschaltung 21 des Antriebs 5 verbunden, deren anderer Eingang mit einem Ausgang 22 der Vergleichsschaltung 12 verbunden ist. Der Ausgang der Anlaßschaltung 21 ist mit dem Steuereingang des Antriebs 5 zur hin- und hergehenden Bewegung verbunden.

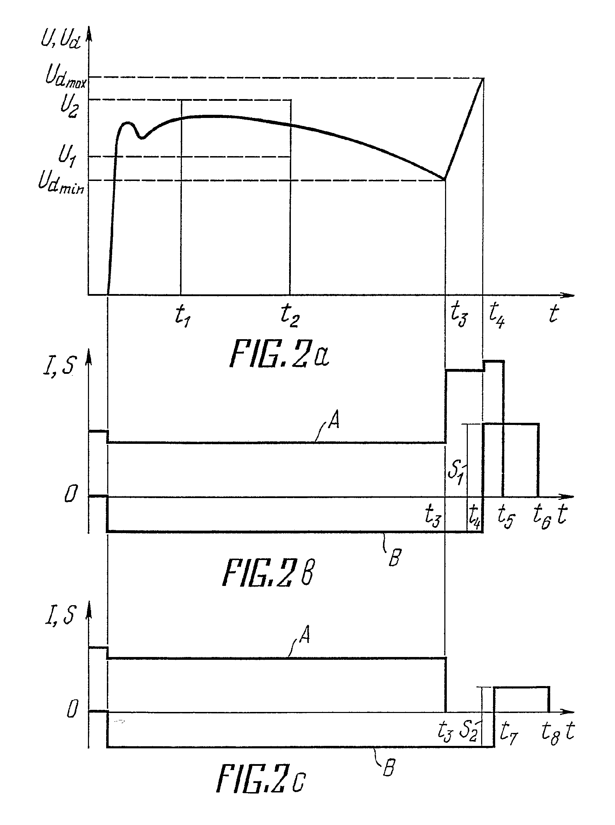

Zum besseren Verständnis des Wesens des erfindungsgemässen Verfahrens sind in Fig. 2 Zeitdiagramme einer Änderung: a) der Gleichspannungskomponente $U_d$ des elektrischen Lichtbogens; b,c) des Lichtbogenstroms 1 (Kurve A) und der Verschiebung S (Kurve B) eines der Schweissteile 2,3 ohne bzw. mit Rücksicht auf die Wechselspannungskomponente $U_a$ dargestellt.

Das Verfahren zum Preßschweissen mit der Erwärmung von Teilen durch einen sich in einem Magnetfeld bewegenden Lichtbogen wird durch die beschriebene Einrichtung wie folgt realisiert.

In die Spannvorrichtungen 1 (Fig. 1) werden die Teile 2,3 mit einem Arbeitsluftspalt $\delta$ zwischen deren Stirnflächen gleichachsig eingespannt, in dem durch Anlegen einer Spannung von der Schweißstromquelle 7 an die Spannvorrichtungen 1 ein elektrischer Lichtbogen $\delta$ gezündet wird.

Experimentell ist festgestellt worden, dass die Grösse $\delta$ des Arbeitsluftspaltes in einem Bereich von 1,5 bis 2,0 mm liegt und durch den Wert der Leerlaufspannung der Schweißstromquelle 7 bestimmt wird. Bei Überschreiten der oberen Grenze durch den Wert $\delta$ des Arbeitsluftspaltes tritt ein Abreissen des Lichtbogens und bei Unterschreiten der unteren Grenze ein Kurzschluss ein. Dem eingestellten Arbeitsluftspalt $\delta$ entspricht beim Schweissen der Teile 2,3 aus niedriggekohlten Stählen ohne Schutzgas ein Wert der Gleichspannungskomponente $U_d$ des Lichtbogens 6, welcher Wert im Bereich von 24 bis 30 V liegt.

Zugleich mit der Zündung des Lichtbogens 6 wird im Arbeitsluftspalt $\delta$ mittels der Magneten 4 ein Magnetfeld erzeugt. Infolge der Wechselwirkung des Stroms des Lichtbogens 6 mit dem Magnetfeld bewegt sich der Lichtbogen 6 auf dem Umfang der Stirnflächen der Teile 2,3, wodurch sie erhitzt werden.

Experimentell ist festgestellt worden, dass am Anfang des Vorganges die Gleichspannungskomponente $U_d$ des Lichtbogens 6 mit dem Anlauf des Lichtbogens 6 zunimmt und dann anzunehmen beginnt. Diese Abnahme erfolgt, bevor die Stirnflächen der Teile 2,3 aufzuschmelzen beginnen. Andererseits ist die Gleichspannungskomponente $U_d$ des elektrischen Lichtbogens 6 direkt proportional zur Länge des Lichtbogens 6, die durch die Grösse $\delta$ des Arbeitsluftspaltes zwischen den Stirnflächen der Schweissteile 2,3 bestimmt wird. Im vorliegenden Fall hängt die Abnahme des Wertes $U_d$ mit der Verringerung des Arbeitsluftspaltes $\delta$ infolge einer Wärmeausdehnung der Schweissteile 2,3 bei deren Erwärmung durch den Lichtbogen 6 zusammen. Die Art der Änderung $U_d$ in der Zeit ist für verschiedene Werkstoffe identisch, wird durch den Anteil der für die Erwärmung der Teile 2,3 aufgewendeten Wärmeenergie definiert und hängt vom linearen Wärmeausdehnungskoeffizienten des Werkstoffes der Teile 2,3 ab. Die Abnahme der Gleichspannungskomponente $U_d$ infolge der linearen Ausdehnung kann 20% des Wertes $U_d$ im eingeschwungenen Vorgang (nach der Stabilisierung der Bewegung des Lichtbogens 6) erreichen. Da die Verlängerung der Teile 2,3 bei deren Erwärmung und demzufolge die Verringerung des Arbeitsluftspaltes $\delta$ von der Erhitzungstemperatur abhängt, so kann die Temperatur der Stirnflächen der Schweissteile 2,3 nach dem laufenden Wert der Gleichspannungskomponente $U_d$ des Lichtbogens 6 beurteilt werden.

Am Spannungsgeber 9 trifft ein dem laufenden Wert der Spannung am Lichtbogen 6 entsprechendes Signal ein, wo dieses Signal in zwei Signale getrennt wird, die Informationen über die Wechsel- und die Gleichspannungskomponente $U_a$ bzw. $U_d$ tragen.

Im Falle einer mechanischen Vorbearbeitung der Stirnflächen der Schweissteile 2,3, die eine Konstanz des Arbeitsluftspaltes $\delta$ auf deren Umfang sichert, ist die Wechselkomponente $U_a$ nicht gross, und sie kann vernachlässigt werden, während die Steuerung des Schweissvorganges nach der Gleichkomponente $U_d$ verwirklicht werden kann.

Der laufende Wert der Gleichspannungskomponente $U_d$ des Lichtbogens 6 gelangt auf den Eingang 10 der Vergleichsschaltung 12, die Bezugssignale erzeugt, deren Werte voreingestellt und dem Minimalwert $U_{d\,min}$ und dem Maximalwert $U_{d\,max}$ der Gleichspannungskomponente $U_d$ zugeordnet sind.

Die Werte $U_{d\,min}$ und $U_{d\,max}$ werden experimentell ermittelt, wobei $U_{d\,min}$ von einer Erhitzung der Stirnflächen der Teile 2,3 auf die Temperatur der plastischen Verformung und $U_{d\,max}$ von der Aufschmelzung der Stirnflächen zeugt.

Zugleich erzeugt die Vergleichsschaltung 12 andere Bezugssignale $U_1$, $U_2$, deren voreingestellte Werte (24 bis 30 V) einem Änderungsbereich der Gleichspannungskomponente $U_d$ des Lichtbogens 6 entsprechen, in dem ein stabiles Brennen des Lichtbogens 6 ohne Abreissen oder Kurzschluss beobachtet wird, wobei sich der Bereich der Signale $U_1$, $U_2$ in Grenzen $U_{d\,min}$, $U_{d\,max}$ (20 bis 40 V) bewegt.

1 bis 2 s nach der Zündung des Lichtbogens 6 (Zeitpunkt $t_1$, Fig. 2) und nach der Erreichung einer stabilen Bewegung durch diesen wird ein Vergleichen des laufenden Wertes der Gleichkomponente $U_d$ mit den Bezugssignalen $U_1$, $U_2$ begonnen. Falls $U_d$ den genannten Bereich verlassen hat, was von einem Überschreiten des zulässigen Bereichs (1,5 bis 2,0 mm) durch die Grösse des Arbeitsluftspaltes $\delta$ zeugt, gibt die Vergleichsschaltung 12 (Fig. 1) ein Steuersignal ab, das vom Ausgang 16 am zweiten Eingang des Schalters 15 und von diesem am Steuereingang 17 der Schweißstromquelle 7 eintrifft und die letztere abschaltet. Dann werden eines der Schweissteile 2,3 losgelassen, der vorgegebene Arbeitsluftspalt $\delta$ eingestellt, der Lichtbogen 6 neugezündet und ein Magnetfeld aufgebaut.

Falls der laufende Wert $U_d$ den genannten Bereich (24 bis 30 V) nicht verlässt, so wird 2 bis 7 s (Zeitpunkt $t_2$, Fig. 2a) nach der Zündung des Lichtbogens 6 der laufende Wert der Gleichkomponente $U_d$ mit deren Minimalwert $U_{d\,min}$ verglichen.

Infolge einer Wärmeausdehnung der Stirnflächen der Schweissteile 2,3 bei ihrer Erhitzung durch den Lichtbogen 6 verringert sich der Spalt $\delta$ und dementsprechend der laufende Wert der Gleichspannungskomponente $U_d$ des Lichtbogens 6. In dem Augenblick der Erreichung des Wertes $U_{d\,min}$ durch den Wert $U_d$ (Zeitpunkt $t_3$, Fig. 2), was von der Erwärmung der Stirnflächen der Schweissteile 2,3 auf die Temperatur der plastischen Verformung zeugt, erzeugt die Vergleichsschaltung 12 ein Steuersignal, das vom Ausgang 13 der Schaltung 12 am Eingang des Stromreglers 14 ankommt. Hierbei trifft das Signal vom Ausgang des Reglers 14 am Eingang 18 der Schweißstromquelle 7 ein, auf welches ein stossartiger Anstieg des Stroms des elektrischen Lichtbogens 6 (Fig. 2b, Kurve A) verwirklicht wird.

Ein solcher stossartiger Anstieg des Stroms des elektrischen Lichtbogens 6 führt zur Aufschmelzung der Stirnflächen der Schweissteile 2,3, wodurch der Arbeitsluftspalt $\delta$ zwischen ihnen vergrossert wird.

Experimentell ist festgestellt worden, dass die Schichtdicke des auf der Stirnfläche jedes Teiles 2,3 aufgeschmolzenen Metalls vor dem Stauchen der Teile 2,3 0,5 bis 0,8 mm betragen muss. Falls die Schichts des aufgeschmolzenen Metalls unterhalb von 0,5 mm liegt, sind die Oxyde von der Stirnfläche nicht ganz entfernt und werden aus der Stoßstelle beim Stauchen nicht verdrängt. Ist die Schichtdicke des aufgeschmolzenen Metalls oberhalb von 0,8 mm, so steigt der Gradient des Temperaturfeldes übermässig an, und beim Stauchen ist es nicht möglich, die Teile 2,3 um einen Wert zu verformen, der zum Zerdrücken sämtlicher Unebenheiten und zur Verdrängung des flüssigen Metalls aus der Stoßstelle ausreicht. Im ersten wie auch im zweiten Fall liegt die Güte der Schweissverbundung niedrig. Mit der Vergrösserung des Arbeitsluftspaltes $\delta$ nimmt der laufende Wert der Gleichspannungskomponente $U_d$ zu. Sobalt das vom Spannungsgeber 9 am Eingang 10 der Vergleichsschaltung 12 ankommende und dem laufenden Wert der Gleichspannungskomponente $U_d$ entsprechende Signal den Maximalwert $U_{d\ max}$ erreicht hat, trifft vom Ausgang 22 der Vergleichsschaltung 12 am zweiten Eingang der Anlaßschaltung 21 ein Steuersignal ein, mit dem der Antrieb 5 eingeschaltet wird, der ein Stauchen der Schweissteile 2,3 verwirklicht. Beim Stauchen verschiebt sich das Schweissteil 3 in Richtung des Teiles 2 um einen Abstand $s_1$ (Fig. 2b, Kurve B), der den Arbeitsluftspalt $\delta$ überschreitet und für eine Zusammenwirkung

der Schweissteile 2,3 (Fig. 1) bis zu deren plastischer Verformung sorgt, die für die Bildung der Schweissverbindung benötigt wird. Die Teile 2,3 werden im zusammengepressten Zustand im Laufe von 2 bis 3 s gehalten. In dieser Periode schaltet die Schweißstromquelle 7 (Zeitpunkt $t_5$, Fig. 2b, Kurve A) ab, worauf die Teile 2,3 freigegeben werden und der Antrieb 5 (Fig. 1) die Spannvorrichtungen 1 in den Ausgangszustand (Zeitpunkt $t_6$, Fig. 2b) bringt.

Ausgehend vom Obengesagten ist es offensichtlich, dass das erfindungsgemässe Verfahren es gestattet, die tatsächliche Erwärmung der Schweissteile zu berücksichtigen und auf Grund dessen mit einer hohen Genauigkeit den Augenblick des stossartigen Lichtbogenstromanstiegs und des Stauchens zu ermitteln. Es werden also Bedingungen für die Berücksichtigung eventueller zufälliger Schwankungen von Schweissparametern und Abmessungen der Schweissteile geschaffen, was die Stabilität der Güte der Schweissverbindungen erhöht.

Falls für die Schweissung Teile 2,3 mit eventuellen lokalen Erhöhungen oder Vertiefungen eingesetzt werden, wird die Wechselspannungskomponente $U_a$ des Lichtbogens 6 gemessen, die Informationen über die Ungleichmässigkeit des lokalen Spaltes $\delta_i$ trägt und für die ein Grenzwert $U_a$ festgelegt wird, der einem Überschreiten des Arbeitsluftspaltes $\delta$ durch die Grösse des lokalen Spaltes $\delta_i$ entspricht. Vom Spannungsgeber 9 gelangt das $U_a$ zugeordnete Signal auf den Eingang 11 der Vergleichsschaltung 12. Dieses Signal wird mit einem Bezugssignal verglichen, das dem Grenzwert $U_s$ entspricht, experimentell festgestellt ist und vom Überschreiten des Arbeitsluftspaltes $\delta$ durch die lokale Grösse des Spaltes $\delta_i$ (in der Zeichnung nicht gezeigt) zeugt. Wird das Bezugssignal durch das dem laufenden Wert der Wechselkomponente $U_a$ entsprechende Signal übertroffen, so kommt vom Ausgang 19 der Vergleichsschaltung 12 am dritten Eingang des Schalters 15 ein Steuersignal zur Vorbereitung auf die Abschaltung der Schweißstromquelle 7 an. Vom Ausgang 19 der Vergleichsschaltung 12 gelangt das gleiche Signal auf den ersten Eingang der Verzögerungsschaltung 20. Sobald das dem laufenden Wert der Gleichspannungskomponente $U_d$ entsprechende Signal auf den Pegel des Bezugssignals abfällt, das $U_{d\,min}$ entspricht, gibt die Vergleichsschaltung 12 vom Ausgang 13 ein Steuersignal auf den ersten Eingang des Schalters 15 und auf den zweiten Eingang der Verzögerungsschaltung 20. Bei Vorhandensein der zwei Steuersignale schaltet der Schalter 15 die Schweißstromquelle 7 ab, und die Verzögerungsschaltung 20 erzeugt nach Ablauf eines Zeitintervalls ($t_3$ bis $t_7$, Fig. 2c), das voreingestellt und für eine zusätzliche Oxydierung der Stirnflächen der Schweissteile 2,3 (Fig. 1) zur Vermeidung ihrer Verschweissung benötigt wird, ein Steuersignal, das am ersten Eingang der Anlaßschaltung 21 eintrifft. Hierbei schaltet die Anlaßschaltung 21 den Antrieb 5 ein, der das Teil 3 in Achsrichtung um einen Wert $S_2$ (Fig.2c, Kurve B) verschiebt, bis die Stirnflächen der Teile 2,3 im Laufe eines Zeitintervalls ($t_7$ bis $t_8$, Fig. 2c) einander berühren, was zu deren Abkühlung auf eine Temperatur unterhalb der Temperatur der plastischen Verformung des Werkstoffes der Schweissteile erforderlich ist. Infolge solch einer Zusammenwirkung werden die Unebenheiten auf den Stirnflächen der Teile 2,3 (Fig. 1) ausgeglichen. Dann werden die Schweissteile 2,3 durch den Antrieb 5 auseinandergebracht, und es wird ein voreingestellter Arbeitsluftspalt $\delta$ zwischen ihren Stirnflächen eingestellt, in dem ein elektrischer Lichtbogen 6 neugezündet wird, und es wird das Schweissverfahren in der oben beschriebenen Reihenfolge durchgeführt.

Eine Überwachung der Gleichmässigkeit des Spaltes durch Messung der Wechselspannungskomponente des Lichtbogens gestattet es, in Abhängigkeit von der Bestimmung der Schweissgruppe, entweder die Schweissteile auszusortieren oder den Werkstoffverbrauch zur Beseitigung des Ausschusses durch Ausgleichen der Stirnflächen der Teile vor der Durchführung ihrer Schweissung zu reduzieren.

Zum besseren Verständnis des Wesens und der Vorteile der Erfindung soll nachstehend ein Ausführungsbeispiel der Erfindung angeführt werden.

Die aus niedriggekohletem Stahl hergestellten zu verschweissenden Rohre von 57 mm Durchmesser und 5 mm Wanddicke wurden durch die Spannvorrichtungen einer Schweissanlage mit einem Arbeitsluftspalt $\delta$ = 2,0 mm aufgenommen.

Im Arbeitsluftspalt wurden ein elektrischen Lichtbogen gezündet und mit Hilfe von Dauermagneten ein Magnetfeld erzeugt. Nach Ablauf von 2 s wurde bei Erreichen einer stabilen Bewegung durch den Lichtbogen eine Kontrolle der Lichtbogenspannung durchgeführt. Die Gleichspannungskomponente musste gemäss der Vorabstimmung in den Grenzen von 24 bis 28 V liegen. Verliess der Wert der Gleichspannungskomponente des Lichtbogens den genannten Bereich, was von einer falschen Einstellung des Arbeitsluftspaltes $\delta$ zeugte, schaltete die Steuereinheit den Schweissgleichrichter ab.

Für die Wechselspannungskomponente des Lichtbogens wurde ein Grenzwert $U_a'$ = 6 V eingestellt. Auch voreingestellt wurden die Werte der Bezugssignale: $U_{d\,min}$ = 21 V und $U_{d\,max}$ = 35 V.

Lag die Gleichspannungskomponente $U_d$ in den Grenzen des eingestellten Bereichs, wurden die Stirnflächen der Teile durch den elektrischen Lichtbogen so lange erwärmt, bis die Gleichspannungskomponente auf 21 V abgefallen war. Der Lichtbogenstrom war im Laufe des gesamten Erwärmungsvorganges gleich 250 A. Darauf folgte ein stossartiger Lichtbogenstromanstieg auf 1000 A, weshalb die Stirnflächen der Schweissteile aufschmolzen, der Spalt $\delta$ zunahm und $U_d$ anwuchs. Bei einem Wert $U_d$ = 35 V wurde gestaucht. Die Geschwindigkeit der Annäherung der Teile betrug beim Stauchen mindestens 150 mm/s und die Stauchkraft 60 kN. Die mittlere Schweisszeit machte, beginnend mit dem Augenblick der Lichtbogenzündung, 12 s aus.

Eine künstliche lokale Vergrösserung des Spaltes um 0,8 mm führte dazu, dass der Schweissgleichrichter nach Absinken des Wertes der Gleichkomponente auf 21 V abschaltete, der Lichtbogen erlosch, und die Stirnflächen der Teile nach Ablauf von 1 s aneinandergepresst wurden. Das anschliessende Auseinanderbringen der Teile um den Wert des Arbeitsluftspaltes $\delta$ = 2,0 mm und ein Lichtbogenzünden bewirkten einen normalen Verlauf des Schweissvorganges.

Das erfindungsgemässe Schweissverfahren gestattet es, die Schweisszeit bei Änderung des Lichtbogenstroms automatisch zu ändern. So verlängerte sich die Schweisszeit bei einer Abnahme des Lichtbogenstroms auf der Stufe der Stirnflächen auf 200 A bis auf 15 s. Die Dauer des stossartigen Stromanstiegs belief sich in beiden Fällen auf 0,2 s. Auf solche Weise wird der Vorgang der Voreinstellung der Schweissparameter erleichtert, dementsprechend verringert sich auch die erforderliche Anzahl von Naturmodellen, die für derartige Einstellung benötigt werden.

Das beschriebene Verfahren sichert eine hohe Stabilität der Schweissgüte, wobei der Ausschuss 4% der Gesamtzahl der Schweissverbindungen gegenüber 6% im bekannten Verfahren nicht überschreitet.

Gewerbliche Anwendbarkeit

Diese Erfindung kann in verschiedenen Bereichen des Maschinenbaues bei der Herstellung von Hohlteilen mit einer geschlossenen Kontur sowie im Bau oder bei der Verlegung von Rohrleitungen angewendet werden. Zweckmässig ist die Anwendung der Erfindung im Kraftfahrzeug- und Traktorenbau bei der Fertigung von Gelenkwellen, Reaktionsstangen, Auspuffrohren und anderen Teilen sowie im Kesselbau bei der Herstellung von Dampfleitungen.

PATENTANSPRÜCHE

1. Verfahren zum Preßschweissen von Teilen mit der Erwärmung durch einen sich in einem Magnetfeld bewegenden Lichtbogen, darin bestehend, dass man die Schweissteile (2,3) gleichachsig mit einem Arbeitsluftspalt ($\delta$) zwischen ihren Stirnflächen anordnet, in dem ein elektrischer Lichtbogen (6) gezündet wird, im Arbeitsluftspalt ($\delta$) ein Magnetfeld erzeugt, unter dessen Wirkung sich der elektrische Lichtbogen (6) auf dem Umfang der Stirnflächen der Schweissteile (2,3) bewegt, wobei er sie auf die Temperatur einer plastischen Verformung des Werkstoffes der Schweissteile erhitzt, den Zeitpunkt der Erreichung dieser Temperatur feststellt, seit welchem ein stossartiger Anstieg des Lichtbogenstroms auf einen Wert verwirklicht wird, bei dem die Temperatur der Stirnflächen der Schweissteile den Schmelzpunkt des Wekstoffes der Schweissteile erreicht, und ein Stauchen der Schweissteile (2,3) durchführt, dadurch g e k e n n z e i c h n e t, dass die Bestimmung des Zeitpunktes, bei dem die Temperatur der Stirnflächen der Schweissteile praktisch der Temperatur der plastischen Verformung des Werkstoffes der Schweissteile gleich ist, durch Messen der Gleichspannungskomponente ($U_d$) des elektrischen Lichtbogens (6) erfolgt, wobei für diese Gleichkomponente ($U_d$) ein Minimalwert ($U_{d\ min}$) eingestellt wird, bei dem die Temperatur der Stirnflächen der Schweissteile praktisch gleich der Temperatur der plastischen Verformung des Werkstoffes der Schweissteile ist, und bei Erreichen des Minimalwertes durch die Gleichspannungskomponente ($U_d$) des elektrischen Lichtbogens (6) ein stossartiger Anstieg des Lichtbogenstroms verwirklicht wird.

2. Verfahren nach Anspruch 1, dadurch g e k e n n z e i c h n e t, dass ein Maximalwert ($U_{d\ max}$) der Gleichspannungskomponente ($U_d$) des elektrischen Lichtbogens (6) eingestellt wird, bei dem die Stirnflächen der Schweissteile (2,3) aufgeschmolzen werden, und bei Erreichen des Maximalwertes ($U_{d\ max}$) durch die Gleichspannungskomponente ($U_d$) des elektrischen Lichtbogens (6) ein Stauchen der Schweissteile (2,3) durchgeführt wird.

3. Verfahren nach Anspruch 1,2, dadurch g e -
k e n n z e i c h n e t , dass die Grösse eines lokalen
Spaltes ( $\delta_i^\wedge$ ) auf dem Umfang der Stirnflächen der
Schweissteile (2,3) in einem Zeitintervall von der
Zündung des Lichtbogens (6) bis zum Augenblick der
Erreichung des Minimalwertes ($U_{d\ min}$) durch die Gleichspannungskomponente ($U_d$) des elektrischen Lichtbogens (6) bestimmt und bei Überschreiten des Arbeitsluftspaltes ($\delta^\wedge$) durch die Grösse des lokalen Spaltes ( $\delta_i^\wedge$ )
der elektrische Lichtbogen (6) gelöscht wird, die
Schweissteile (2,3) in axialer Richtung aneinandergebracht werden, bis ihre Stirnflächen einander im Laufe
einer Zeit berühren, die für deren Abkühlung auf eine
Temperatur unterhalb der Temperatur der plastischen
Verformung des Werkstoffes der Schweissteile (2,3)
erforderlich ist, worauf die Schweissteile (2,3) um die
Grösse des ursprünglich eingestellten Arbeitsluftspaltes ( $\delta^\wedge$ ) auseinandergebracht werden, in dem ein elektrischer Lichtbogen (6) neugezündet wird.

4. Verfahren nach Anspruch 3, dadurch g e k e n n -
z e i c h n e t , dass die Bestimmung der Grösse des lokalen Spaltes ( $\delta_i^\wedge$ ) auf dem Umfang der Stirnflächen
der Schweissteile (2,3) durch Messung der Wechselspannungskomponente ($U_a$) des elektrischen Lichtbogens (6)
erfolgt, für die ein Grenzwert ($U_a'$) festgelegt wird,
der dem Überschreiten des Arbeitsluftspaltes ($\delta^\wedge$) durch
die Grösse des lokalen Spaltes ( $\delta_i^\wedge$ ) entspricht.

FIG.1

FIG.2a

FIG.2b

FIG.2c

# INTERNATIONAL SEARCH REPORT

International Application No PCT/SU 89/00025

## I. CLASSIFICATION OF SUBJECT MATTER (if several classification symbols apply, indicate all) 6

According to International Patent Classification (IPC) or to both National Classification and IPC

IPC 5    B23K 9/08, 20/02

## II. FIELDS SEARCHED

### Minimum Documentation Searched 7

| Classification System | Classification Symbols |
|---|---|
| IPC 5 | B23K 9/08, 11/04, 20/02 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | DD, A5, 129179 (KROHN, HINRICH et al.) 4 January 1978 (04.01.78) see the claims, the drawing | 1-4 |
| A | DD, A5, 141798 (PENNING, EHRENFRIED) 21 May 1980 (21.05.80) see the claims, the drawing | 1-4 |
| A | GB, A, 2094694 (BLACKS EQUIPMENT LIMITED) 22 September 1982 (22.09.82) see the claims, the drawing | 1-4 |

------------------------

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 23 August 1989 (23.08.89) | 12 October 1989 (12.10.89) |

| International Searching Authority | Signature of Authorized Officer |
|---|---|
| ISA/SU | |

Form PCT/ISA/210 (second sheet) (January 1985)